# EUROPÄISCHE PATENTSCHRIFT

(11) **EP 1 777 178 B1**
(45) Veröffentlichungstag und Bekanntmachung des Hinweises auf die Patenterteilung: **06.08.2008**
(21) Anmeldenummer: 05022893.1
(22) Anmeldetag: 20.10.2005
(51) Int. Cl.: B65G 69/00

(54) **Torabdichtung mit verbesserter Abdichtung der oberen Ecke**
Dock seal with improved sealing of the upper corner
Etanchement de portail avec le joint amélioré du coin supérieur

(43) Veröffentlichungstag der Anmeldung: 25.04.2007
(73) Patentinhaber: DYNA SEAL BV, 1822 BB Alkmaar (NL)
(72) Erfinder: Wagemaker, Anthonius Nicolas Jan, 1703 SJ Heerhugowaard (NL)
(74) Vertreter: Leinweber & Zimmermann

(56) Entgegenhaltungen:
- EP-A- 0 477 695
- EP-A- 0 641 731
- DE-A1- 4 101 523
- DE-A1- 4 242 088
- US-A- 4 671 029
- US-A- 6 044 597
- US-A1- 2003 140 579

## Beschreibung

Die Erfindung betrifft eine Dichtungsanordnung zum Abdichten eines Übergangs zwischen einer in einer Gebäudewand vorgesehenen Gebäudeöffnung und einem an die Gebäudeöffnung herangefahrenen Fahrzeug nach dem Oberbegriff von Patentanspruch 1.

Derartige Dichtungsanordnungen kommen zum Einsatz, wenn Fahrzeuge zum Be- und Entladen an eine üblicherweise mit einem geeigneten Tor verschließbare Öffnung eines Lagergebäudes od. dgl. heranfahren. Dabei wird durch die Dichtungsanordnung ein wetterunabhängiges Be- und Entladen der Fahrzeuge ermöglicht. Zu diesem Zweck sind die Seitenteile und die oberhalb der Gebäudeöffnung festgelegte Dichtungseinrichtung üblicherweise im Bereich ihrer der Gebäudewand abgewandten vorderen Begrenzungsflächen mit sich nach innen erstreckenden schürzenartigen Dichtungselementen ausgestattet, die sich beim Anfahren des Fahrzeugs dichtend an einen Fahrzeugaufbau anlegen können.

Zur Vermeidung von Beschädigungen der Dichtungsanordnung beim Heranfahren des Fahrzeugs weisen die Seitenteile im Bereich ihrer der Gebäudewand abgewandten vorderen Begrenzungsflächen üblicherweise ein nachgiebiges Material, wie etwa Schaumstoff, auf, das in einer reißfesten Bespannung aufgenommen sein kann.

Zur Vermeidung von Beschädigungen der Dichtungsanordnung beim Heranfahren besonders hoher Fahrzeuge oder durch Hochpumpen des bereits herangefahrenen Fahrzeugs unterhalb der oberhalb der Gebäudeöffnung festgelegten Dichtungseinrichtung ist diese Dichtungseinrichtung zweckmäßigerweise bzgl. den Seitenteilen bewegbar. Dabei können Beschädigungen durch das Heranfahren eines Fahrzeugs an die Dichtungsanordnung vermieden werden, wenn ein der Gebäudewand abgewandter vorderer Rand der Dichtungseinrichtung durch das heranfahrende Fahrzeug, unabhängig von den Seitenteilen, in Richtung auf die Gebäudewand verschoben werden kann.

Eine Beschädigung durch ein bereits unterhalb der Dichtungseinrichtung stehendes und sich hochpumpendes Fahrzeug kann vermieden werden, wenn die Dichtungseinrichtung dem sich hochpumpenden Fahrzeug durch eine entsprechende Schwenkbewegung um eine horizontale Ausweichachse ausweichen kann. Dazu ist die Ausweichachse zweckmäßigerweise in dem der Gebäudewand zugewandten hinteren Bereich der Dichtungseinrichtung angeordnet.

Zur Vermeidung des Eindringens von Schmutz und/oder Feuchtigkeit durch einen sich bei einer Ausweichbewegung der Dichtungseinrichtung zwischen den Seitenteilen und der darüber angeordneten Dichtungseinrichtung öffnenden Spalt kann die bzgl. den Seitenteilen bewegbare Dichtungseinrichtung ein zusätzliches Dichtungselement aufweisen, welches zumindest den oberen Randbereich einer äußeren Begrenzungsfläche eines der Seitenteile zumindest teilweise überlappt. Dabei ist zweckmäßigerweise im Bereich jedes seitlichen Randes der Dichtungseinrichtung mindestens ein die äußere Begrenzungsfläche des entsprechenden Seitenteils überlappendes Dichtungselement vorgesehen. Bei einer Ausweichbewegung der Dichtungseinrichtung wird auch das daran vorgesehene Dichtungselement bzgl. den Seitenteilen versetzt. Durch die Überlappung der äußeren Begrenzungsflächen der Seitenteile wird allerdings sichergestellt, daß sich durch diese Ausweichbewegung kein das Eindringen von Staub, Schmutz oder Feuchtigkeit erlaubender Spalt öffnet.

Dichtungsanordnungen ähnlich der gerade beschriebenen Art sind beispielsweise in der DE 41 01 523 A1 beschrieben. Bei den in dieser Schrift beschriebenen Dichtungsanordnungen kann eine Ausweichbewegung der Dichtungseinrichtung zusätzlich durch einerseits an der Gebäudewand befestigte und sich ausgehend von der Gebäudewand schräg nach oben erstreckende und andererseits an einer vorderen Quertraverse der Dichtungseinrichtung angebrachte Führungsarme geführt werden. EP 0477695 offenbart eine Dichtungsanordnung nach dem Oberbegriff von Anspruch 1, bei dem das sich nach unten entreckende Dichtungselement randbeschwert ist.

Bei Einsatz der bekannten Dichtungsanordnungen hat es sich gezeigt, daß es trotz der aufwendigen Konstruktion der Dichtungsanordnung mit entsprechenden Führungselementen zur Führung der Ausweichbewegung der Dichtungseinrichtung im Langzeitbetrieb noch zum Eindringen von Schmutz und Feuchtigkeit in den zwischen der Gebäudeöffnung und dem an die Gebäudeöffnung herangefahrenen Fahrzeug gebildeten Zwischenraum kommen kann.

Angesichts dieser Probleme im Stand der Technik liegt der Erfindung die Aufgabe zugrunde, eine Dichtungsanordnung der eingangs beschriebenen Art bereitzustellen, mit der der Zwischenraum zwischen der Gebäudeöffnung und einem an die Gebäudeöffnung herangefahrenen Fahrzeug zuverlässig abgedichtet werden kann.

Erfindungsgemäß wird diese Aufgabe durch eine Weiterbildung der bekannten Dichtungsanordnung nach dem kennzeichnenden Teil von Anspruch 1 gelöst.

Diese Erfindung geht auf die Erkenntnis zurück, daß die bei den bekannten Dichtungsanordnungen beobachtete mangelhafte Abdichtung in erster Linie auf eine Versetzbewegung zwischen den Seitenteilen und der oberhalb der Seitenteile angeordneten Dichtungseinrichtung zurückzuführen ist, welche durch das heranfahrende Fahrzeug veranlaßt wird und eine solche Verlagerung der die äußeren Begrenzungsflächen der Seitenteile überlappenden Dichtungselemente verursachen kann, daß sich diese Dichtungselemente zwischen den oberen Rand der Seitenteile und die Dichtungseinrichtung verschieben, so daß es zu einer das Eindringen von Schmutz und Feuchtigkeit erlaubenden Spaltbildung kommen kann.

Durch die erfindungsgemäße Weiterbildung der bekannten Dichtungsanordnung wird eine solche Verschiebung dadurch verhindert, daß das Dichtungselement zusätzlich an dem davon überlappten Seitenteil festgelegt wird, um so eine weitere Positionierungshilfe für das Dichtungselement bereitzustellen. Dabei wurde von der Erkenntnis Gebrauch gemacht, daß eine zusätzliche Befestigung des Dichtungselements der Dichtungseinrichtung an den Seiten die gewünschte Ausweichbewegung der Dichtungseinrichtung bzgl. dem Seitenteil nicht übermäßig beeinträchtigt. Eine Verschiebung des der Gebäudewand abgewandten vorderen Randes der Dichtungseinrichtung in Richtung auf die Gebäudewand wird beispielsweise trotz Befestigung des Dichtungselements der Dichtungseinrichtung an dem davon überlappten Seitenteil weiterhin ermöglicht, wenn das Dichtungselement an dem der Gebäudewand zugewandten hinteren Randbereich der äußeren Begrenzungsfläche des Seitenteils festgelegt ist.

Eine beim Hochpumpen eines unterhalb der Dichtungseinrichtung angeordneten Fahrzeugaufbaus gewünschte Ausweichbewegung der Dichtungseinrichtung wird bei der erfindungsgemäßen Befestigung des Dichtungselements der Dichtungseinrichtung an dem Seitenteil weiterhin ermöglicht, wenn das Dichtungselement bzgl. einer etwa parallel zur Ausweichachse verlaufenden Schwenkachse verschwenkbar an dem Seitenteil festgelegt ist, wobei eine solche Befestigung mit Hilfe eines die Schwenkachse bildenden, das Dichtungselement durchsetzenden und von außen in das Seitenteil eingeführten Befestigungsbolzens, insbesondere Schraubbolzens, bewirkt werden kann.

Wie bei herkömmlichen Dichtungsanordnungen kann die oberhalb der Gebäudeöffnung festgelegte Dichtungseinrichtung eine sich über die gesamte Breite der Gebäudeöffnung und sich ausgehend von der Gebäudewand vorzugsweise bis zu dem der Gebäudewand abgewandten vorderen Rand der Seitenteile erstreckende zumindest bereichsweise nachgiebige und wasserdichte Dichtungsbahn aufweisen, die nach Art einer wasserdichten Bespannung zwischen der Gebäudewand und dem vorderen Rand der Seitenteile aufgespannt sein kann.

Im Rahmen der Erfindung ist auch daran gedacht, die Dichtungsbahn lediglich mit Hilfe der die Seitenteile überlappenden Dichtungselemente zu stabilisieren. Als besonders zweckmäßig hat es sich allerdings erwiesen, wenn die Dichtungseinrichtung mindestens ein sich etwa parallel zur Ausweichachse erstreckendes und im Bereich des der Gebäudewand abgewandten vorderen Randes der Dichtungsbahn daran befestigtes Stabilisierungselement aufweist. Dieses Stabilisierungselement kann in Form einer sich über die gesamte Breite der Gebäudeöffnung erstreckenden, beispielsweise als Hohlprofil ausgeführten Quertraverse aus einem starren Material, wie etwa Stahl oder Aluminium, gebildet sein.

Eine weitere Stabilisierung der Dichtungsbahn ist möglich, wenn die Dichtungseinrichtung auch im Bereich des der Gebäudewand zugewandten hinteren Randes der Dichtungsbahn ein entsprechendes Stabilisierungselement aufweist.

Konstruktiv hat es sich als besonders zweckmäßig erwiesen, wenn das einerseits an dem Seitenteil befestigte Dichtungselement andererseits an dem im Bereich des vorderen Randes der Dichtungsbahn angeordneten Stabilisierungselement befestigt ist. Eine besonders zuverlässige und sichere Befestigung kann dabei im Bereich einer der Gebäudewand abgewandten vorderen Begrenzungsfläche des Stabilisierungselements bzw. der Quertraverse erfolgen.

Eine Beeinträchtigung der Beweglichkeit der Dichtungseinrichtung bzgl. den Seitenteilen kann besonders zuverlässig vermieden werden, wenn das Dichtungselement im Bereich einer vorderen oberen Ecke an dem vorderen Stabilisierungselement und im Bereich einer hinteren oberen Ecke am Seitenteil befestigt ist. In diesem Fall erstreckt sich die Verbindungslinie zwischen den beiden Befestigungspunkten des Dichtungselements etwa parallel zum seitlichen Rand der Dichtungsbahn in der Ausgangsposition, d. h. in der Position, in der eine Bewegung bzgl. den Seitenteilen noch nicht bewirkt wurde. Dann können Dichtungsbahn und Dichtungselement besonders einfach bzgl. horizontalen Ausweichachsen verschwenkt werden.

Eine weitere Stabilisierung des Dichtungselements kann ohne Beeinträchtigung der Bewegbarkeit der Dichtungseinrichtung bzgl. den Seitenteilen erreicht werden, wenn dem Dichtungselement eine Vorspanneinrichtung zugeordnet ist, mit der es gegen eine äußere Begrenzungsfläche des davon überlappten Seitenteils gedrängt wird. Eine solche Vorspanneinrichtung kann konstruktiv besonders einfach in Form eines elastisch dehnbaren Strangelements verwirklicht werden, welches einerseits eine im Bereich der vorderen Hälfte des Dichtungselements vorgesehene Ausnehmung durchdringt und andererseits an einer bzgl. dem Dichtungselement in Richtung auf die Gebäudeöffnung versetzt angeordneten Stelle an der Gebäudewand und/oder dem Seitenteil befestigt ist. Eine Lösung des Strangelements von dem Dichtungselement kann verhindert werden, wenn ein die Ausnehmung des Dichtungselements durchdringender Abschnitt des Strangelements eine beispielsweise durch eine Verknotung gebildete Verdickung aufweist.

Die Dichtungsbahn der Dichtungseinrichtung einer erfindungsgemäßen Dichtungsanordnung läßt sich besonders einfach an einer Gebäudewand befestigen, wenn der der Gebäudewand zugewandte hintere Rand der Dichtungsbahn eine in eine Aufnahme eines an der Gebäudewand festgelegten Befestigungselements aufgenommene Verdickung aufweist und die Dichtungsbahn eine vorzugsweise schlitzartige Öffnung der die Verdickung aufnehmenden Aufnahme durchsetzt. Ebenso kann der der Gebäudewand abgewandte vordere Rand der Dichtungsbahn eine in eine Aufnahme eines an dem vorderen Stabilisierungselement angeordneten Befestigungselements aufgenommene Verdickung aufweisen.

Zur Sicherstellung der Bewegbarkeit der Dichtungseinrichtung bzgl. der Seitenteile hat es sich als zweckmäßig erwiesen, wenn das an den Seitenteilen befestigte Dichtungselement nicht unmittelbar an der Dichtungsbahn der Dichtungseinrichtung festgelegt ist. Zur Gewährleistung einer zuverlässigen Abdichtung kann die Dichtungseinrichtung in diesem Fall mindestens ein weiteres sich ausgehend von der Dichtungsbahn etwa parallel zu einer äußeren Begrenzungsfläche mindestens eines der Seitenteile nach unten erstreckendes Dichtungselement aufweisen, wobei der untere Rand des weiteren Dichtungselements zwischen der äußeren Begrenzungsfläche des Seitenteils und dem oberen Rand des an diesem Seitenteil befestigten Dichtungselements der Dichtungseinrichtung angeordnet sein kann. Auf diese Weise wird mit Hilfe des an dem Seitenteil befestigten Dichtungselements und des sich ausgehend von der Dichtungsbahn nach unten erstreckenden weiteren Dichtungselements ein zwischen dem oberen Rand des Seitenteils und der Dichtungsbahn gebildeter Spalt zuverlässig abgedichtet. Dabei wird das weitere Dichtungselement zweckmäßigerweise mit einer geeigneten Vorspanneinrichtung gegen die äußere Begrenzungsfläche des Seitenteils gedrängt.

Wie vorstehend bereits im Zusammenhang mit herkömmlichen Dichtungsanordnungen erläutert, weisen die Seitenteile zweckmäßigerweise einen vorderen Bereich aus einem elastischen Material auf. Zur Befestigung der Dichtungselemente an der Gebäudewand einerseits und zur Befestigung des Dichtungselements an den Seitenteilen andererseits hat es sich allerdings als zweckmäßig erwiesen, wenn ein der Gebäudewand zugewandter und zum Befestigen des Dichtungselements dienender hinterer Bereich mindestens eines Seitenteils zumindest teilweise aus einem starren Material, wie etwa Holz, besteht, während ein der Gebäudewand abgewandter vorderer Bereich zumindest teilweise aus einem nachgiebigen Material, wie etwa Schaumstoff, besteht. Dabei kann ein ggf. das starre Material und/oder das nachgiebige Material aufweisender Kern der Seitenteile zumindest teilweise in einer Bespannung aus einem bahnförmigen, flexiblen und vorzugsweise reißfesten Material aufgenommen sein.

Ebenso wie bei herkömmlichen Dichtungsanordnungen kann die Dichtungseinrichtung und/oder mindestens eines der Seitenteile einer erfindungsgemäßen Dichtungsanordnung eine an ein an die Gebäudeöffnung herangefahrenes Fahrzeug anlegbare Schürze aufweisen.

Das an dem Seitenteil festgelegte Dichtungselement weist zweckmäßigerweise eine besonders hohe Reißfestigkeit auf. Diese kann sichergestellt werden, wenn das Dichtungselement eine beidseitig mit PVC beschichtete zweilagige Multifilament-Polyesterbahn aufweist.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- **Fig. 1**: eine explosionsartige Darstellung einer erfindungsgemäßen Dichtungsanordnung,
- **Fig. 2**: eine Detaildarstellung der Dichtungseinrichtung der in Fig. 1 dargestellten Dichtungsanordnung,
- **Fig. 3**: eine Detaildarstellung des oberen Randes eines Seitenteils der in Fig. 1 dargestellten Dichtungsanordnung,
- **Fig. 4**: eine die Montage der in Fig. 1 dargestellten Dichtungsanordnung erläuternde Darstellung und
- **Fig. 5**: eine die Funktion der in Fig. 1 dargestellten Dichtungsanordnung erläuternde Seitenansicht.

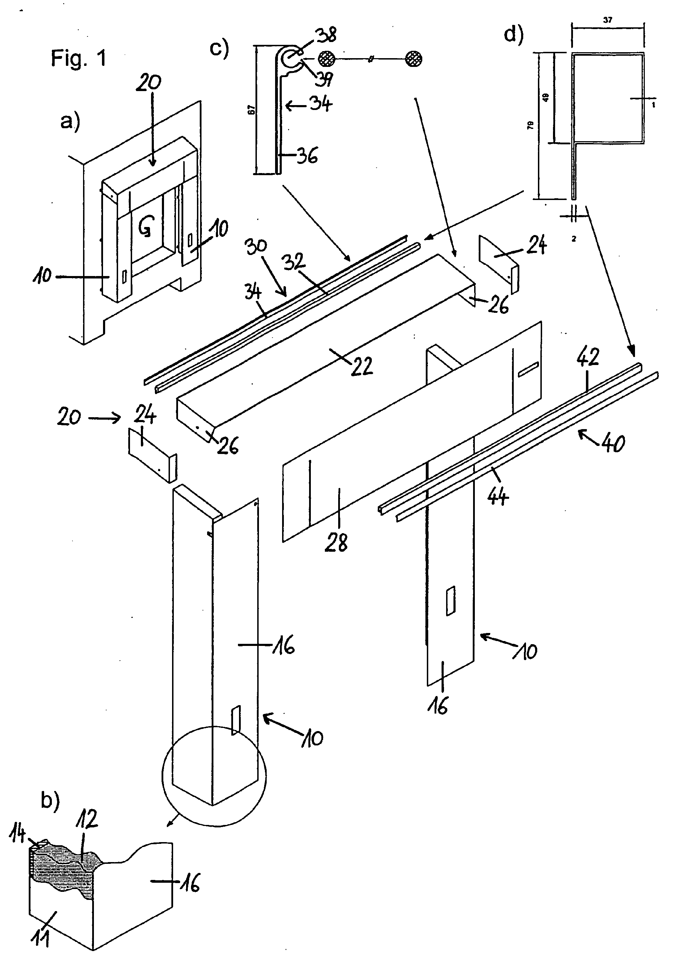

Die in der Zeichnung dargestellte Torabdichtung umfaßt im wesentlichen zwei im Bereich der seitlichen Ränder einer in einer Gebäudewand vorgesehenen Gebäudeöffnung G (vgl. Fig. 1a)) an der Gebäudewand befestigte Seitenteile 10 und eine oberhalb der Gebäudeöffnung angebrachte Dichtungseinrichtung 20.

Wie besonders deutlich der Detaildarstellung gemäß Fig. 1b) zu entnehmen ist, umfassen die Seitenteile 10 einen in einer Bespannung 11 aufgenommenen Kern, der in seinem der Gebäudewand zugewandten hinteren Bereich aus Holz 14 besteht und dessen der Gebäudewand abgewandter vorderer Bereich aus einem nachgiebigen Schaumstoff 12 gebildet ist. Im Bereich der der Gebäudewand abgewandten vorderen Begrenzungsfläche weisen die Seitenteile 10 in Richtung auf das jeweils gegenüberliegende Seitenteil 10 weisende Schürzen 16 auf. Ebenso weist die Dichtungseinrichtung 20 eine nach unten ragende Schürze 28 auf. Diese Schürzen 16, 28 können sich dichtend an einen Fahrzeugaufbau eines an die Gebäudeöffnung G herangefahrenen Fahrzeugs anlegen.

Die oberhalb der Gebäudeöffnung G an der Gebäudewand befestigte Dichtungseinrichtung 20 der in der Zeichnung dargestellten Dichtungsanordnung umfaßt eine sich ausgehend von der Gebäudewand bis zu dem der Gebäudewand abgewandten vorderen Rand der Seitenteile 10 erstreckende Dichtungsbahn 22, eine zum Befestigen der Dichtungsbahn 22 an der Gebäudewand dienende Befestigungsanordnung 30, eine an dem der Gebäudewand abgewandten vorderen Rand der Dichtungsbahn 22 festlegbare Stabilisierungsanordnung 40, die sich ausgehend von dem vorderen Rand der Dichtungsbahn 22 nach unten erstreckende Schürze 28, zwei den oberen Randbereich der äußeren Begrenzungsflächen der Seitenteile 10 überlappende Dichtungselemente 24 sowie weitere Dichtungselemente 24, welche zwischen den Dichtungselementen 26 und der Dichtungsbahn 22 angeordnet sind.

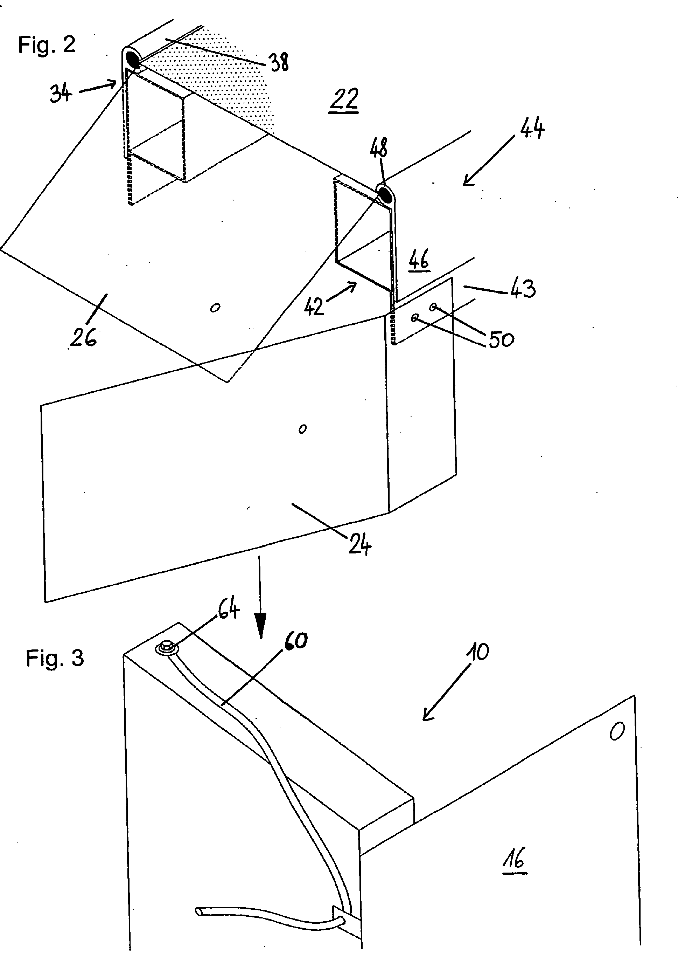

Wie besonders deutlich der Fig. 1c) und der Fig. 2 zu entnehmen ist, umfaßt die Befestigungsanordnung 30 ein Befestigungselement 34 mit einem an die Gebäudewand anlegbaren Befestigungsschenkel 36 und einer Aufnahme 38, in die eine Verdickung am hinteren Rand der Dichtungsbahn 22 einführbar ist. Wie beispielsweise in Fig. 2 zu erkennen ist, durchsetzt die Dichtungsbahn 22 eine der Gebäudewand abgewandte schlitzförmige Öffnung 39 der Aufnahme 38. Zusätzlich umfaßt die Befestigungsanordnung 30 eine als Hohlprofil ausgeführte Quertraverse 32 mit einem nach unten abragenden Stabilisierungssteg 33. Die Quertraverse 32 ist an einer der Gebäudewand abgewandten äußeren Begrenzungsfläche des Befestigungsschenkels 36 des Befestigungselements 34 angebracht.

Wie besonders deutlich in Fig. 2 zu erkennen ist, umfaßt die Stabilisierungsanordnung 40 eine als Hohlprofil ausgeführte Quertraverse 42 mit einem vorderen und nach unten abragenden Stabilisierungsschenkel 43 und ein Befestigungselement 44 mit einem an einer äußeren Begrenzungsfläche der Quertraverse 42 anliegenden Befestigungsschenkel 46 und einer in Richtung auf die Gebäudewand offenen Aufnahme 48, in der eine Verdikkung im Bereich des der Gebäudewand abgewandten vorderen Randes der Dichtungsbahn 22 aufgenommen ist.

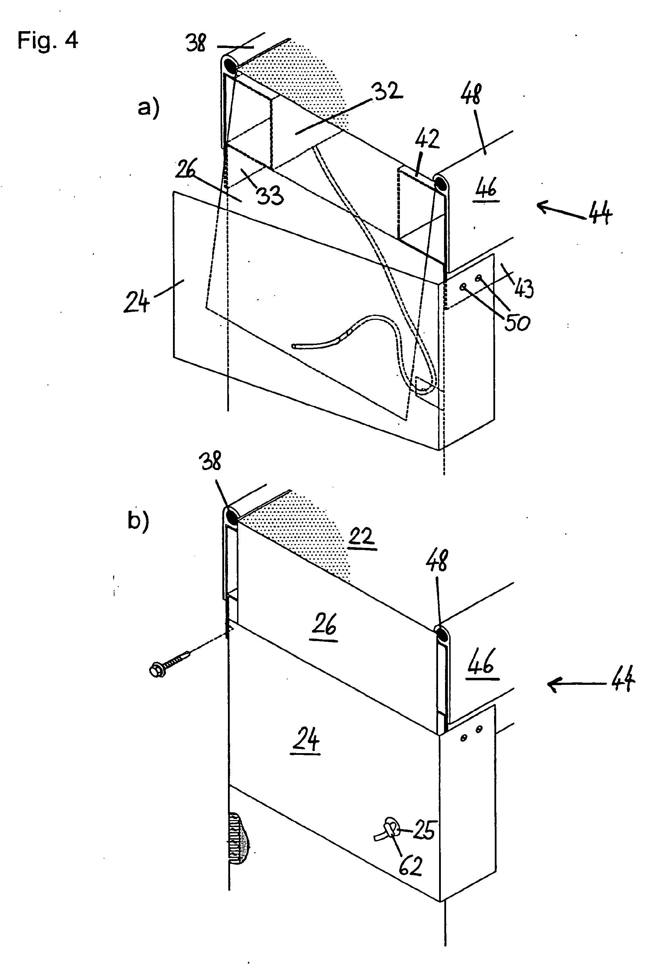

Das im montierten Zustand (vgl. Fig. 4b)) eine äußere Begrenzungsfläche des Seitenteils 10 überlappende Dichtungselement 24 ist bei 50 an der der Gebäudewand abgewandten vorderen Begrenzungsfläche des Stabilisierungsschenkels 43 der Quertraverse 42 befestigt. An der der Gebäudewand zugewandten hinteren oberen Ecke ist das Dichtungselement 24 mit einem dieses Dichtungselement durchsetzenden und in den aus Holz gebildeten hinteren Bereich des Kerns eingeführten Schraubbolzen an dem Seitenteil 10 befestigt.

Wie in Fig. 3 zu erkennen ist, weist das Seitenteil 10 ein an seiner oberen Begrenzungsfläche befestigtes elastisch dehnbares Strangelement 60 auf, welches gemäß Fig. 4b) eine Ausnehmung 25 in dem Dichtungselement 24 durchdringt, wobei ein Ausrutschen des Strangelements 60 aus der Öffnung 25 mit Hilfe einer durch eine Verknotung 62 gebildeten Verdickung verhindert ist. Das Strangelement 60 ist an einer bzgl. dem Dichtungselement 24 in Richtung auf die Gebäudeöffnung versetzt angeordneten Befestigungsstelle 64 an der oberen Begrenzungsfläche des Seitenteils 10 befestigt. Dadurch wird erreicht, daß das Dichtungselement 24 mit Hilfe des gespannten Strangelements 60 gegen die äußere Begrenzungsfläche des Seitenteils 10 gedrängt wird.

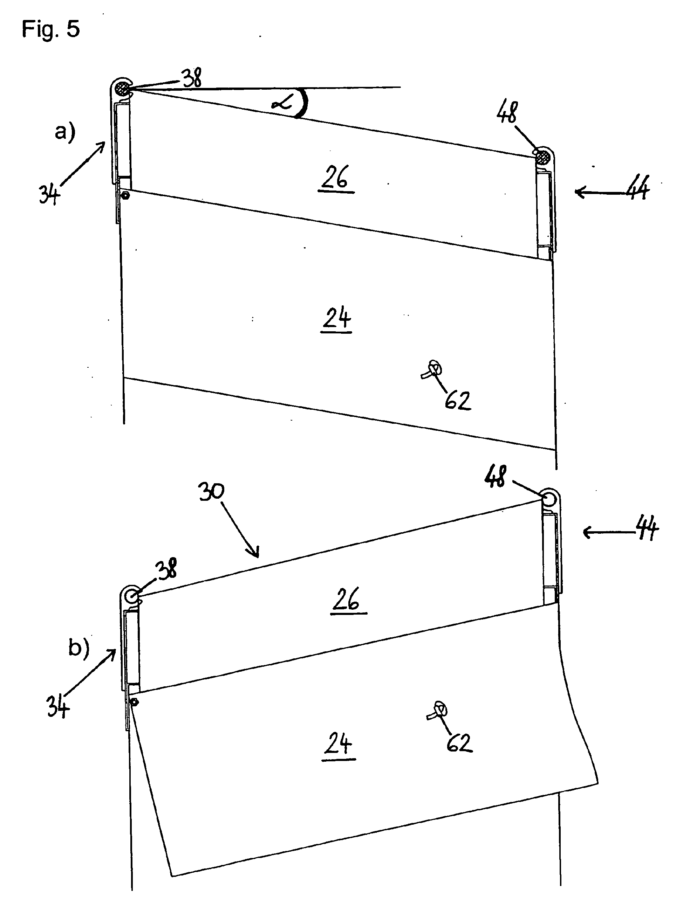

Wie besonders deutlich in Fig. 4b) und Fig. 5 zu erkennen ist, wird ein zwischen dem einerseits an der vorderen Quertraverse 42 und andererseits an dem Seitenteil 10 befestigten Dichtungselement 24 und der Dichtungsbahn 22 gebildeter Zwischenraum von einem weiteren, sich ausgehend von der Dichtungsbahn 22 nach unten erstreckenden Dichtungselement 26 überbrückt. Dabei ist das Dichtungselement 26 im montierten Zustand zwischen der äußeren Begrenzungsfläche des Seitenteils 10 und dem Dichtungselement 24 angeordnet. Durch diese Konstruktion wird einerseits eine ausreichende Bewegbarkeit der im wesentlichen aus der Dichtungsbahn 22, dem Dichtungselement 24 und dem weiteren Dichtungselement 26 bestehenden Dichtungseinrichtung 20 und andererseits eine ausreichende Abdichtung zwischen dem Seitenteil 10 und der sich über die gesamte Breite der Gebäudeöffnung erstreckenden Dichtungsbahn 22 sichergestellt.

Bei der in der Zeichnung dargestellten Ausführungsform der Erfindung erstreckt sich die Dichtungsbahn 22 ausgehend von der Gebäudewand schräg nach unten in Richtung auf den der Gebäudewand abgewandten vorderen Rand der Seitenteile 10, wie besonders deutlich in Fig. 5a) zu erkennen ist. Dabei schließt die Dichtungsbahn 22 einen Winkel α von etwa 5 bis 15° mit einer Horizontalebene ein. Dadurch wird erreicht, daß Regenwasser ohne weiteres von der Dichtungsbahn 22 ablaufen kann.

In der in Fig. 5a) dargestellten Normalstellung der erfindungsgemäßen Dichtungsanordnung liegt die vordere Quertraverse 42 auf der oberen Begrenzungsfläche des Seitenteils 10 auf. Ausgehend von der in Fig. 5a) dargestellten Normalstellung kann die Dichtungseinrichtung 20 durch einen sich hochpumpenden Fahrzeugaufbau bzgl. einer im wesentlichen durch die in der Aufnahme 38 des Befestigungselements 34 gebildete Verdikkung der Dichtungsbahn 22 gebildete Ausweichachse nach oben verschwenkt werden. Dabei bleibt ein Spalt zwischen der Dichtungsbahn 22 und dem Seitenteil 10 mit Hilfe des einerseits an der Dichtungseinrichtung 20 und andererseits an dem Seitenteil 10 befestigten Dichtungselements 24 und des zwischen dem Dichtungselement 24 und der Dichtungsbahn 22 angeordneten weiteren Dichtungselements 26 dicht verschlossen. Ebenso ist in Fig. 5a) erkennbar, daß ein oberer Rand des Dichtungselements 24 etwa parallel zum schräg nach unten abfallenden seitlichen Rand der Dichtungsbahn 22 verläuft.

Die Erfindung ist nicht auf das anhand der Zeichnung erläuterte Ausführungsbeispiel beschränkt. Beispielsweise kann die Ausweichbewegung der Dichtungseinrichtung mit Hilfe von beispielsweise in der DE 41 01 523 A1 beschriebenen Führungselementen geführt werden. Auch ist es möglich, die Ausführung der Seitenteile zu verändern oder andersartige Stabilisierungsanordnungen zum Einsatz zu bringen.

## Patentansprüche

1. Dichtungsanordnung zum Abdichten eines Übergangs zwischen einer in einer Gebäudewand vorgesehenen Gebäudeöffnung (G) und einem an die Gebäudeöffnung (G) herangefahrenen Fahrzeug mit zwei im Bereich der seitlichen Ränder der Gebäudeöffnung (G) an der Gebäudewand festlegbaren Seitenteilen (10) mit einander zugewandten inneren Begrenzungsflächen und einander entgegengesetzten äußeren Begrenzungsflächen und einer bzgl. den Seitenteilen (10) bewegbaren, insbes. bzgl. einer vorzugsweise etwa horizontalen Ausweichachse verschwenkbar oberhalb der Gebäudeöffnung (G) an der Gebäudewand festlegbaren Dichtungseinrichtung (20) mit einer sich über die gesamte Breite der Gebäudeöffnung (G) und sich ausgehend von der Gebäudewand erstreckenden Dichtungsbahn (22) und mindestens einem sich ausgehend von der Dichtungsbahn (22) etwa parallel zu einer äußeren Begrenzungsfläche mindestens eines der Seitenteile (10) nach unten erstreckenden Dichtungselement (26), **gekennzeichnet durch** mindestens ein zumindest einen oberen Randbereich einer äußeren Begrenzungsfläche eines Seitenteils (10) zumindest teilweise überlappendes Dichtungselement (24), das an dem davon überlappten Seitenteil (10) festgelegt ist, wobei zumindest ein unterer Rand des sich nach unten erstreckenden Dichtungselements (26) zwischen der äußeren Begrenzungsfläche des Seitenteils (10) und dem oberen Rand des an diesem Seitenteil (10) festgelegten Dichtungselements (24) angeordnet ist.

2. Dichtungsanordnung nach Anspruch 1, **dadurch gekennzeichnet, daß** das festgelegte Dichtungselement (24) an dem der Gebäudewand zugewandten hinteren Randbereich der äußeren Begrenzungsfläche des Seitenteils (10) festgelegt ist.

3. Dichtungsanordnung nach Anspruch 1 oder 2, **dadurch gekennzeichnet, daß** das festgelegte Dichtungselement (24) bzgl. einer etwa parallel zur Ausweichachse verlaufenden Schwenkachse verschwenkbar an dem Seitenteil (10) festgelegt ist.

4. Dichtungsanordnung nach einem der vorhergehenden Ansprüche, **dadurch gekennzeichnet, daß** sich die Dichtungsbahn (22) vorzugsweise bis zu dem der Gebäudewand (G) abgewandten vorderen Rand der Seitenteile (10) erstreckt und zumindest bereichsweise nachgiebig und wasserdicht ausgebildet ist.

5. Dichtungsanordnung nach einem der vorhergehenden Ansprüche, **dadurch gekennzeichnet, daß** die Dichtungseinrichtung (20) mindestens ein sich etwa parallel zur Ausweichachse erstreckendes und im Bereich des der Gebäudewand abgewandten vorderen Randes der Dichtungsbahn (22) an der Dichtungsbahn (22) befestigtes Stabilisierungselement (42) aufweist.

6. Dichtungsanordnung nach Anspruch 5, **dadurch gekennzeichnet, daß** das einerseits an dem Seitenteil (10) befestigte Dichtungselement (24) andererseits an dem Stabilisierungselement (42) befestigt ist.

7. Dichtungsanordnung nach Anspruch 6, **dadurch gekennzeichnet, daß** das festgelegte Dichtungselement (24) im Bereich einer vorderen oberen Ecke an dem Stabilisierungselement (42) und im Bereich einer hinteren oberen Ecke am Seitenteil (10) befestigt ist.

8. Dichtungsanordnung nach einem der vorhergehenden Ansprüche, **dadurch gekennzeichnet, daß** das festgelegte Dichtungselement (24) mit einer Vorspanneinrichtung gegen eine äußere Begrenzungsfläche des davon überlappten Seitenteils (10) gedrängt wird.

9. Dichtungsanordnung nach Anspruch 8, **dadurch gekennzeichnet, daß** die Vorspanneinrichtung ein elastisch dehnbares Strangelement (60) aufweist, welches einerseits eine im Bereich der vorderen Hälfte des festgelegten Dichtungselements (24) vorgesehene Ausnehmung (25) durchdringt und andererseits an einer bzgl. dem festgelegten Dichtungselement (24) in Richtung auf die Gebäudeöffnung (G) versetzt angeordneten Stelle an der Gebäudewand und/oder dem Seitenteil (10) befestigt ist.

10. Dichtungsanordnung nach einem der vorhergehenden Ansprüche, **dadurch gekennzeichnet, daß** der der Gebäudewand zugewandte hintere Rand der Dichtungsbahn (22) eine in einer Aufnahme (38) eines an der Gebäudewand festgelegten Befestigungselements (34) aufgenommene Verdickung aufweist.

11. Dichtungsanordnung nach einem der Ansprüche 5 bis 7, **dadurch gekennzeichnet, daß** der der Gebäudewand abgewandte vordere Rand der Dichtungsbahn (22) eine in eine Aufnahme (48) eines an dem Stabilisierungselement (42) angeordneten Befestigungselements (44) aufgenommene Verdickung aufweist.

12. Dichtungsanordnung nach einem der vorhergehenden Ansprüche, **dadurch gekennzeichnet, daß** das sich nach unten erstreckende Dichtungselement (26) mit einer Vorspanneinrichtung gegen die äußere Begrenzungsfläche des Seitenteils (10) gedrängt wird.

13. Dichtungsanordnung nach einem der vorhergehenden Ansprüche, **dadurch gekennzeichnet, daß** ein der Gebäudewand zugewandter und zum Befestigen des festgelegten Dichtungselements (24) dienender hinterer Bereich des Seitenteils (10) zumindest bereichsweise aus einem starren Material, wie etwa Holz (14), besteht.

14. Dichtungsanordnung nach einem der vorhergehenden Ansprüche, **dadurch gekennzeichnet, daß** ein der Gebäudewand abgewandter vorderer Bereich des Seitenteils (10) zumindest teilweise aus einem nachgiebigen Material, wie etwa Schaumstoff (12), besteht.

15. Dichtungsanordnung nach einem der vorhergehenden Ansprüche, **dadurch gekennzeichnet, daß** ein ggf. das starre Material (14) und/oder das nachgiebige Material (12) aufweisender Kern des Seitenteils (10) zumindest teilweise in einer Bespannung (11) aus einem bandförmigen, flexiblen Material aufgenommen ist.

16. Dichtungsanordnung nach einem der vorhergehenden Ansprüche, **dadurch gekennzeichnet, daß** die Dichtungseinrichtung (20) und/oder mindestens eines der Seitenteile (10) eine an ein an die Gebäudeöffnung herangefahrenes Fahrzeug anlegbare Schürze (16, 28) aufweist.

## Claims

1. A sealing system for sealing a transition between a building opening (G) provided in a building wall and a vehicle driven up to the building opening (G) with two side sections (10) fixable to the building wall in the region of the side edges of the building opening (G) with inner surfaces facing towards one another and outer surfaces facing away from one another and a sealing device (20) fixable to the building wall, moveable in relation to the side sections (10), in particular in relation to a preferably approximately horizontal diverging axis pivotable above the building opening (G), with a sealing strip (22) extending over the whole width of the building opening (G) and away from the building wall, and at least one sealing element (26) extending downwardly from the sealing strip (22) approximately parallel to an outer surface of at least one of the side sections (10), **characterised by** at least one sealing element (24) at least partially overlapping at least one upper edge region of an outer surface of a side section (10) which is fixed to the side section (10) overlapped by the latter, at least one lower edge of the downwardly extending sealing element (26) being disposed between the outer surface of the side section (10) and the upper edge of the sealing element (24) fixed to this side section (10).

2. The sealing system according to Claim 1, **characterised in that** the fixed sealing element (24) is fixed to the rear edge region of the outer surface of the side section (10) facing towards the building wall.

3. The sealing system according to Claim 1 or 2, **characterised in that** the fixed sealing element (24) is fixed pivotably to the side section (10) in relation to a pivot axis extending approximately parallel to the diverging axis.

4. The sealing system according to any of the preceding claims, **characterised in that** the sealing strip (22) preferably extends to the front edge of the side sections (10) facing away from the building wall (G) and in certain regions at least is designed to be flexible and watertight.

5. The sealing system according to any of the preceding claims, **characterised in that** the sealing device (20) has at least one stabilisation element (42) extending approximately parallel to the diverging axis and attached to the sealing strip (22) in the region of the front edge of the sealing strip (22) facing away from the building wall.

6. The sealing system according to Claim 5, **characterised in that** the sealing element (24) attached on the one hand to the side section (10) is attached on the other hand to the stabilisation element (42).

7. The sealing system according to Claim 6, **characterised in that** the fixed sealing element (24) is attached to the stabilisation element (42) in the region of a front upper corner and to the side section (10) in the region of a rear upper corner.

8. The sealing system according to any of the preceding claims, **characterised in that** the fixed sealing element (24) is pressed against an outer surface of the side section (10) overlapped by it by means of a pretensioning device.

9. The sealing system according to Claim 8, **characterised in that** the pretensioning device has an elastically expandable cable element (60) which on the one hand passes through an opening (25) provided in the region of the front half of the fixed sealing element (24) and on the other hand is attached to a point on the building wall and/or the side section (10) disposed offset in relation to the fixed sealing element (24) in the direction of the building opening (G).

10. The sealing system according to any of the preceding claims, **characterised in that** the rear edge of the sealing strip (22) facing towards the building wall has a thickening accommodated in a receiver (38) of an attachment element (34) fixed on the building wall (34).

11. The sealing system according to any of Claims 5 to 7, **characterised in that** the front edge of the sealing strip (22) facing away from the building wall has a thickening accommodated in a receiver (48) of an attachment element (44) disposed on the stabilisation element (42).

12. The sealing system according to any of the preceding claims, **characterised in that** the downwardly extending sealing element (26) is pressed against the outer surface of the side section (10) by means of a pretensioning device.

13. The sealing system according to any of the preceding claims, **characterised in that** a rear region of the side section (10) facing towards the building wall and serving to attach the fixed sealing element (24) is made, at least in certain regions, of a rigid material such as wood (14) for example.

14. The sealing system according to any of the preceding claims, **characterised in that** a front region of the side section (10) facing away from the building wall is made, at least partially, of a flexible material such as foam (12) for example.

15. The sealing system according to any of the preceding claims, **characterised in that** a core of the side section (10) having if applicable the rigid material (14) and/or the flexible material (12) is accommodated at least partially in a lining (11) made of a strip-shaped, flexible material.

16. The sealing system according to any of the preceding claims, **characterised in that** the sealing device (20) and/or at least one of the side sections (10) has an apron (16, 28) which can be positioned over a vehicle driven up to the building opening.

## Revendications

1. Système d'étanchéité pour établir l'étanchéité d'une jonction entre une ouverture de bâtiment (G), prévue dans un mur de bâtiment, et un véhicule approché de cette ouverture (G), comprenant deux éléments latéraux (10) pouvant être fixés au mur du bâtiment, dans la région des bords latéraux de l'ouverture de bâtiment (G), et dotés de surfaces de limitation intérieures, tournées l'une vers l'autre, et de surfaces de limitation extérieures, éloignées l'une de l'autre, et comprenant un dispositif d'étanchéité (20) pouvant être déplacé par rapport aux éléments latéraux (10) et pouvant en particulier être pivoté par rapport à un axe de déviation, de préférence sensiblement horizontal, et être fixé au mur du bâtiment, au-dessus de l'ouverture (G), et comportant une bande d'étanchéité (22), s'étendant à partir du mur du bâtiment et sur toute la largeur de l'ouverture de bâtiment (G), et au moins un élément d'étanchéité (26) s'étendant vers le bas à partir de la bande d'étanchéité (22), de façon sensiblement parallèle à une surface de limitation extérieure d'au moins un des éléments latéraux (10), **caractérisé en ce qu'**il comprend au moins un élément d'étanchéité (24) qui recouvre au moins en partie au moins une zone de bord supérieure d'une surface de limitation extérieure d'un élément latéral (10) et est fixé à cet élément latéral (10) recouvert, où au moins un bord inférieur de l'élément d'étanchéité (26), s'étendant vers le bas, est disposé entre la surface de limitation extérieure de l'élément latéral (10) et le bord supérieur de l'élément d'étanchéité (24) fixé à cet élément latéral (10).

2. Système d'étanchéité selon la revendication 1, **caractérisé en ce que** l'élément d'étanchéité (24) fixe est monté sur la zone de bord arrière de la surface de limitation extérieure de l'élément latéral (10), qui est tournée vers le mur du bâtiment.

3. Système d'étanchéité selon la revendication 1 ou 2, **caractérisé en ce que** l'élément d'étanchéité (24) fixe est monté sur l'élément latéral (10) avec possibilité de pivotement par rapport à un axe qui est sensiblement parallèle à l'axe de déviation.

4. Système d'étanchéité selon une des revendications précédentes, **caractérisé en ce que** la bande d'étanchéité (22) s'étend de préférence jusqu'au bord avant des éléments latéraux (10), qui est éloigné du mur de bâtiment (G), et est réalisée de manière souple et étanche à l'eau, au moins dans certaines zones.

5. Système d'étanchéité selon une des revendications précédentes, **caractérisé en ce que** le dispositif d'étanchéité (20) présente au moins un élément stabilisateur (42) qui est sensiblement parallèle à l'axe de déviation et est fixé à la bande d'étanchéité (22), dans la région du bord avant de la bande d'étanchéité (22) qui est éloigné du mur du bâtiment.

6. Système d'étanchéité selon la revendication 5, **caractérisé en ce que** l'élément d'étanchéité (24), dont un côté est fixé à l'élément latéral (10), est fixé de l'autre côté à l'élément stabilisateur (42).

7. Système d'étanchéité selon la revendication 6, **caractérisé en ce que** l'élément d'étanchéité (24) fixe est relié au niveau d'un angle supérieur avant à l'élément stabilisateur (42) et au niveau d'un angle supérieur arrière à l'élément latéral (10).

8. Système d'étanchéité selon une des revendications précédentes, **caractérisé en ce que** l'élément d'étanchéité (24) fixe est poussé par un moyen de précontrainte contre une surface de limitation extérieure de l'élément latéral (10) qu'il recouvre.

9. Système d'étanchéité selon la revendication 8, **caractérisé en ce que** le moyen de précontrainte présente un élément en forme de cordon (60) extensible élastique, qui traverse d'une part un évidement (25), prévu dans la région de la moitié avant de l'élément d'étanchéité (24) fixe, et est fixé d'autre part au mur du bâtiment et/ou à l'élément latéral (10), à un endroit qui est décalé en direction de l'ouverture de bâtiment (G) par rapport à l'élément d'étanchéité (24) fixe.

10. Système d'étanchéité selon une des revendications précédentes, **caractérisé en ce que** le bord arrière de la bande d'étanchéité (22), qui est tourné vers le mur du bâtiment, présente un bourrelet qui est inséré dans un logement (38) d'un élément de fixation (34) monté sur le mur du bâtiment.

11. Système d'étanchéité selon une des revendications 5 à 7, **caractérisé en ce que** le bord avant de la bande d'étanchéité (22), qui est éloigné du mur du bâtiment, présente un bourrelet qui est inséré dans un logement (48) d'un élément de fixation (44) disposé sur l'élément stabilisateur (42).

12. Système d'étanchéité selon une des revendications précédentes, **caractérisé en ce que** l'élément d'étanchéité (26) s'étendant vers le bas est poussé par un moyen de précontrainte contre la surface de limitation extérieure de l'élément latéral (10).

13. Système d'étanchéité selon une des revendications précédentes, **caractérisé en ce qu'**une portion arrière de l'élément latéral (10), qui est tournée vers le mur du bâtiment et sert à fixer l'élément d'étanchéité (24) fixe, est constituée au moins par zones d'un matériau rigide, par exemple de bois (14).

14. Système d'étanchéité selon une des revendications précédentes, **caractérisé en ce qu'**une portion avant de l'élément latéral (10), qui est éloignée du mur du bâtiment, est constituée au moins en partie d'un matériau souple, par exemple d'un matériau expansé (12).

15. Système d'étanchéité selon une des revendications précédentes, **caractérisé en ce qu'**un noyau de l'élément latéral (10), qui présente éventuellement le matériau rigide (14) et/ou le matériau souple (12), est placé au moins en partie dans un habillage (11) constitué d'un matériau flexible en forme de bande.

16. Système d'étanchéité selon une des revendications précédentes, **caractérisé en ce que** le dispositif d'étanchéité (20) et/ou au moins un des éléments latéraux (10) présente(nt) un tablier (16, 28) pouvant être appliqué contre un véhicule approché de l'ouverture du bâtiment.
